# EUROPÄISCHE PATENTSCHRIFT

(11) **EP 0 609 657 B1**
(45) Veröffentlichungstag und Bekanntmachung des Hinweises auf die Patenterteilung: **07.04.1999**
(21) Anmeldenummer: 94100170.3
(22) Anmeldetag: 07.01.1994
(51) Int. Cl.: A01C 17/00

(54) **Schleuderdüngerstreuer**
Broadcaster
Epandeur centrifuge

(30) Priorität: 02.02.1993 DE 4302801
(43) Veröffentlichungstag der Anmeldung: 10.08.1994
(73) Patentinhaber: Amazonen-Werke H. Dreyer GmbH & Co. KG, D-49205 Hasbergen (DE)
(72) Erfinder: Scheufler, Dr., D-49205 Hasbergen (DE)

(56) Entgegenhaltungen:
- EP-A- 0 181 308
- EP-A- 0 458 107
- DE-A- 4 105 059
- US-A- 5 220 876

## Beschreibung

Die Erfindung betrifft ein Einstellverfahren für einen Schleuderdüngerstreuer gemäß des Oberbegriffes des Patentanspruches 1.

Derartige Schleuderdüngerstreuer sind in der Praxis bekannt geworden.

Der Erfindung liegt die Aufgabe Zugrunde, diese bekannten Einstellverfahren weiterzubilden.

Diese Aufgabe wird erfindungsgemäß durch die kennzeichnenden Maßnahmen des Anspruches 1 gelöst. Aufgrund dieser Maßnahmen ist es möglich, sämtliche Kenn- und Einstellwerte in den Rechner einzugeben, so daß dann in Abhängigkeit diese eingegebenen Daten automatisch die Einstellwerte angezeigt und der Düngerstreuer entsprechend eingestellt wird. Somit wird also das Einstellen des Schleuderdüngerstreuers erheblich vereinfacht, so daß auch mit Hilfskräften der Ausbringvorgang durchgeführt werden kann, wobei die Einstellung automatisch von dem Rechner entsprechend der eingegebenen Daten, wie beispielsweise bereits auf einem PC vorbereitet werden können, vorgenommen wird.

Eine besonders vorteilhafte Ausgestaltung des Einstellverfahrens wird dadurch erreicht, daß in dem Rechner die Zusammenhänge zur Veränderung und/oder Anpassung der Ausbringmenge, Arbeitsbreite und Grenzbestreuung eingespeichert sind.

Hierbei ist in einer Ausführungsform vorgesehen, daß über eine Eingabetastatur des Rechners die Einstellungen veränderbar sind.

In einer anderen Ausführungsform ist vorgesehen, daß auf einem PC zunächst die Düngerplanung erfolgt und dann über entsprechende Übertragungsmittel die auf dem PC erarbeitete Düngerplanung in den Rechner übertragbar ist.

Desweiteren wird eine weitere Automatisierung des Ausbringvorganges dadurch erreicht, daß in dem Rechner die Konturen und die Nährstoffversorgung der zu bestreuenden Fläche einspeicherbar sind, und daß über das GPS-System jeweils die aktuelle Position des Schleuderdüngerstreuers auf der zu bestreuenden Fläche ermittelbar ist.

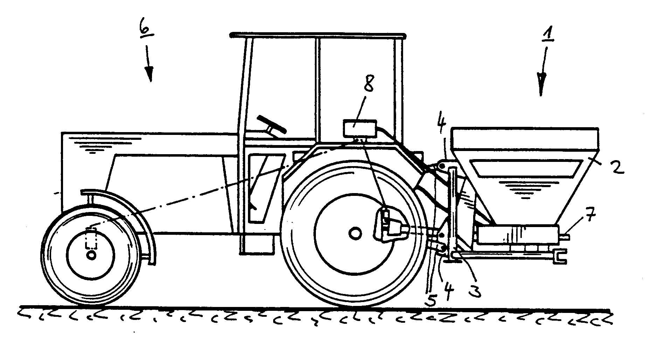

Weitere Einzelheiten der Erfindung sind der Beispielsbeschreibung und der Zeichnung zu entnehmen. Die Zeichnung zeigt
einen an einen Ackerschlepper angebauten Schleuderdüngerstreuer mit dem Rechner zur Steuerung des Schleuderdüngerstreuers in Seitenansicht und in Prinzipdarstellung.

Der Schleuderdüngerstreuer 1 weist den Vorratsbehälter 2 und einen Rahmen 3 auf, der über Dreipunktkupplungselemente 4 verfügt und so an den Dreipunktkraftheber 5 des Ackerschleppers 6 anbaubar ist. Der Schleuderdüngerstreuer 1 weist Dosier- und rotierend angetriebene Schleuderscheiben 7 auf, die in bekannter Weise ausgebildet und daher nicht näher dargestellt sind. Die Dosierorgane sind über eine Fernbedienungsvorrichtung mit einem elektronischen Rechner 8 verbunden und über diesen ein- und verstellbar. In den Rechner sind über eine nicht im einzelnen näher dargestellte Tastatur bzw. über ein geeignetes Übertragungsmittel, beispielsweise eine Chipkarte etc. Kennwerte für die auszubringende Streumenge, Arbeitsbreite, Grenzstreuen und das Vorgewende einzugeben. In Abhängigkeit dieser in den Rechner 8 eingegebenen Kennwerte werden die Einstellwerte automatisch angezeigt und die Dosier- und Ausbringorgane des Schleuderdüngerstreuers 1 werden automatisch eingestellt. In dem Rechner 8 sind weiterhin die Zusammenhänge zur Veränderung und/oder Anpassung der Ausbringmenge, Arbeitsbreite und Grenzbestreuung eingespeichert. Beispielsweise um die Ausbringmenge bei einer Verkleinerung der Arbeitsbreite konstant zu halten, werden auch die Dosierorgane entsprechend verstellt. Bei einer Vergrößerung der Arbeitsbreite, bei der ebenfalls wieder die Ausbringmenge konstant gehalten werden soll, werden die Dosierogane entsprechend nachgestellt. Bei einer Grenzbestreuung, wenn Dünger nicht über den Ackerrand, aber bis zum Ackerrand etwa mit gleichbleibender Streustärke herangeworfen werden soll, wird dieses ebenfalls über den Rechner 8 gesteuert, in dem die Dosierorgane entsprechend eingestellt werden. Dieses kann beispielsweise durch eine Verstellung der Dosierorgane gegenüber den Schleuderscheiben erfolgen, so daß eine Aufgabenflächenveränderung des auf die Schleuderscheibe 7 aufgegebenen Düngers erreicht wird.

Die Einstellung kann in den Rechner 8 über eine Eingabetastatur oder über entsprechende Übertragungsmittels erfolgen, wobei die Düngerplanung zunächst auf einem PC erfolgt und dann mittels geeigneter Übertragungsmittel in den Rechner 8 zu übertragen sind.

Weiterhin können in den Rechner 8 die Kontur und die Nährstoffversorgung der zu bestreuenden Fläche eingespeichert werden. Der Rechner 8 kann für die Anwendung des GPS-Systems ausgebildet sein. In diesem Falle ist es möglich, daß über der GPS-System jeweils die aktuelle Position des Schleuderdüngerstreuers 1 auf der zu bestreuenden Fläche ermittelbar ist. Anhand der jeweils aktuellen Position werden dann die in den Rechner 8 eingegebenen Angaben über die Fläche und der Nährstoffversorgung die Dosierorgane entsprechend gesteuert.

## Patentansprüche

1. Einstellverfahren für einen Schleuderdüngerstreuer (1) mit einem Vorratsbehälter (2), zumindest einem Dosierorgan und zumindest einer Schleuderscheibe (7), wobei das Dosierorgan und/oder die Einstellung von Dosierorganen zur Schleuderscheibe (7) über Fernbedienungsvorrichtungen von einem elektronischen Rechner (8) ein- und verstellbar sind, wobei in dem Rechner (8) Kennwerte für die auszubringende Streumenge und Arbeitsbreite in Abhängigkeit vom Ort auf dem Feld (Nährstoffversorgung der zu bestreuenden Fläche) mittels Übertragungsmittel eingebbar sind, wobei in Abhängigkeit dieser eingegebenen Kennwerte automatisch die Einstellwerte angezeigt und/oder automatisch die Dosier- und Ausbringorgane des Schleuderdüngerstreuers (1) eingestellt werden, dadurch gekennzeichnet, daß auf einem PC zunächst die Düngerplanung erfolgt und dann über entsprechende Übertragungsmittel die auf dem PC erarbeitete Düngerplanung in den Rechner (8) übertragbar ist, daß in dem Rechner (8) die Kontur der zu bestreuenden Fläche einspeicherbar sind, und daß über das GPS-System jeweils die aktuelle Position des Schleuderdüngerstreuers auf der zu bestreuenden Fläche ermittelbar ist.

2. Einstellverfahren nach Anspruch 1, dadurch gekennzeichnet, daß in dem Rechner (8) die Zusammenhänge zur Veränderung und/oder Anpassung der Ausbringmenge, Arbeitsbreite und Grenzbestreuung eingespeichert sind.

## Claims

1. Method for setting a centrifugal fertiliser broadcaster (1) having a hopper (2), at least one metering member and at least one centrifugal disc (7), wherein the metering member and/or the means for setting metering members relative to the centrifugal disc (7) are settable and adjustable by an electronic computer (8) via remote control means, wherein characteristic values for the quantity of broadcast material to be distributed and the working width in dependence on the position in the field (supply of nutrients to the area to be broadcast) can be input to the computer (8) by means of transfer means, wherein, in dependence on these input characteristic values, the setting values are indicated automatically and/or the metering and distribution members of the centrifugal fertiliser broadcaster (1) are set automatically, characterised in that the fertiliser plan is initially drawn-up on a PC, and then the fertiliser plan, which has been drawn-up on the PC, is transferable to the computer (8) by appropriate transfer means, in that the outline of the area to be broadcast can be stored in the computer (8), and in that the actual position of the centrifugal fertiliser broadcaster on the area to be broadcast is determinable by the GPS system.

2. Setting method according to claim 1, characterised in that the circumstances for altering and/or adapting the distribution quantity, working width and broadcasting limits are stored in the computer (8).

## Revendications

1. Procédé de réglage d'un épandeur centrifuge d'engrais (1) comprenant un réservoir (2), au moins un organe de dosage et au moins un disque d'épandage (7), l'organe de dosage et/ou le réglage des organes de dosage par rapport aux disques d'épandage (7) sont réglables et orientables par des dispositifs de télécommande à partir d'un calculateur électronique (8), le calculateur (8) ayant reçu les valeurs caractéristiques concernant la quantité à épandre et la largeur d'épandage en fonction de l'emplacement sur le champ (besoins en amendement de la surface à traiter) informations qui ont été introduites par un moyen de transmission et en fonction des valeurs caractéristiques ainsi introduites, les valeurs de réglage s'affichent automatiquement et/ou commande automatiquement les organes de dosage et de distribution de l'épandeur centrifuge d'engrais (1),
caractérisé en ce qu'
on effectue la planification de l'épandage tout d'abord sur un PC, puis on transmet par un moyen de transmission approprié, la planification de l'épandage d'engrais travaillée sur le PC dans le calculateur (8),
- le calculateur (8) contenant en mémoire le contour de la surface à traiter et,
- par le système GPS, on détermine chaque fois la position instantanée de l'épandeur centrifuge d'engrais sur la surface d'épandage.

2. Procédé de réglage selon la revendication 1,
caractérisé en ce que
le calculateur (8) contient en mémoire les relations pour modifier et/ou adapter les quantités à distribuer, les largeurs de travail et l'épandage en limite de champ.
